# EUROPEAN PATENT APPLICATION

(11) **EP 4 011 998 A1**
(43) Date of publication of application: **15.06.2022**
(21) Application number: 20850796.2
(22) Date of filing: 03.06.2020
(51) Int. Cl.: C09J 11/06, C09J 11/08, C09J 163/00

(54) **ADHESIVE COMPOSITION, CURED PRODUCT, AND JOINED BODY**

(30) Priority: 08.08.2019 JP 2019146136
(71) Applicant: ThreeBond Co., Ltd., Tokyo 192-0398 (JP)
(72) Inventor: OTSUKI, Naoya, Hachioji-shi, Tokyo 192-0398 (JP)
(74) Representative: Haseltine Lake Kempner LLP
(86) International application number: PCT/JP2020/021909
(87) International publication number: WO 2021/024597

(57) **Abstract**

An object of the present invention is to provide an adhesive composition that causes less warpage in adhering materials made of different substances and is superior in adhesion force with keeping bulk strength in the cured product. The present invention is an adhesive composition containing the following components (A) to (D):
component (A): an epoxy-modified plant oil;
component (B): a curable resin at least containing an elastomer-modified epoxy resin, provided that the component (A) is excluded;
component (C): a tackifier; and
component (D): a latent curing agent.

## Description

### TECHNICAL FIELD

The present invention relates to an adhesive composition, a cured product, and an assembly.

### BACKGROUND ART

For weight reduction of automotive vehicles, multi-materialization using substances including aluminum, magnesium, fiber-reinforced plastic (FRP), and carbon-fiber-reinforced plastic (CFRP) for car bodies has been progressing in recent years. One of problems for progressing multi-materialization is joint of materials made of different substances. Examples of representative methods in joint techniques for materials made of different substances include welding joint, mechanical joint, and adhesive joint.

Examples of adhesives for adhesive joint include urethane adhesives, epoxy resin adhesives, phenolic resin adhesives, and modified silicone adhesives. Among them, epoxy resin adhesives are attracting attention because of the superiority in terms of adhesion force, high strength, and thermal resistance.

For example, Japanese Patent Laid-Open No. 2015-196326 (corresponding to U.S. Patent Application Publication No. 2015/0275382) discloses that an epoxy resin adhesive can be used for folded edges (hemming) to fix an outer panel and an inner panel in automobiles.

Japanese Patent Laid-Open No. 2014-91789 (corresponding to U.S. Patent Application Publication No. 2015/0284607) discloses that a heat-curable epoxy resin adhesive can be used for joint of an iron or steel body member and an aluminum roof.

While the method weldbonding, which is a jointing method using spot welding and an adhesive in combination, is used in production lines for car bodies, Japanese Patent Laid-Open No. 2009-108278 discloses that an epoxy resin adhesive can be used as such an adhesive.

### SUMMARY OF INVENTION

However, when being used to laminate different substances such as iron or steel and aluminum, the epoxy resin adhesives disclosed in Japanese Patent Laid-Open No. 2015-196326 (corresponding to U.S. Patent Application Publication No. 2015/0275382), Japanese Patent Laid-Open No. 2014-91789 (corresponding to U.S. Patent Application Publication No. 2015/0284607), and Japanese Patent Laid-Open No. 2009-108278 disadvantageously cause the warpage of the member after curing because of the difference in the linear expansion coefficient between the substances. Known as a countermeasure to prevent the warpage is use of an elastomer-modified epoxy resin having a soft structure that can relax internal stress; however, cured products of the adhesive suffer from a problem of significantly lower bulk strength (tensile strength) (see Comparative Example 2).

The present invention was made in view of such circumstances, and an object of the present invention is to provide an adhesive composition that causes less warpage in adhering materials made of different substances and is superior in adhesion force with keeping bulk strength in the cured product.

The summary of the present invention will be described as follows.
[1] An adhesive composition containing the following components (A) to (D) :
   component (A): an epoxy-modified plant oil;
   component (B): a curable resin at least containing an elastomer-modified epoxy resin, provided that the component (A) is excluded;
   component (C): a tackifier; and
   component (D): a latent curing agent.
[2] The adhesive composition according to [1], wherein the elongation percentage of a cured product of the adhesive composition is 2 to 2000%.
[3] The adhesive composition according to [1] or [2], wherein the epoxy equivalent of the component (A) is 220 to 1500 g/eq.
[4] The adhesive composition according to any one of [1] to [3], wherein the epoxy equivalent of the component (B) is 200 to 1200 g/eq.
[5] The adhesive composition according to any one of [1] to [4], containing 30 to 300 parts by mass of the component (B) with respect to 100 parts by mass of the component (A).
[6] The adhesive composition according to any one of [1] to [5], wherein the elastomer-modified epoxy resin in the component (B) is an epoxy resin modified with urethane rubber, butadiene rubber, or butadiene-acrylonitrile rubber.
[7] The adhesive composition according to any one of [1] to [6], wherein the component (A) is a cardanol-modified epoxy resin.
[8] The adhesive composition according to any one of [1] to [7], containing 5 to 200 parts by mass of the component (C) with respect to 100 parts by mass in total of the components (A) and (B).
[9] The adhesive composition according to any one of [1] to [8], wherein the component (D) is at least one selected from the group consisting of a latent curing agent of epoxy adduct type, a hydrazide compound, a cyclic amidine salt, a thermal cationic polymerization initiator, and dicyandiamide.
[10] The adhesive composition according to any one of [1] to [9], wherein the component (C) is at least one selected from the group consisting of a petroleum-based tackifier, a terpene tackifier, a rosin ester tackifier, and a xylene resin tackifier.
[11] The adhesive composition according to any one of [1] to [10], for adhesion between materials made of substances with different linear expansion coefficients.
[12] The adhesive composition according to any one of [11], wherein the difference in the linear expansion coefficient between the materials made of substances with different linear expansion coefficients is 0.1 × 10⁻⁶/K to 500 × 10⁻⁶/K.
[13] The adhesive composition according to any one of [1] to [12], wherein warpage in adhering materials made of different substances is 3.0 mm or smaller.
[14] A cured product obtained by curing the adhesive composition according to any one of [1] to [13].
[15] An assembly, wherein materials made of different substances are adhered with the adhesive composition according to any one of [1] to [13].

### BRIEF DESCRIPTION OF DRAWINGS

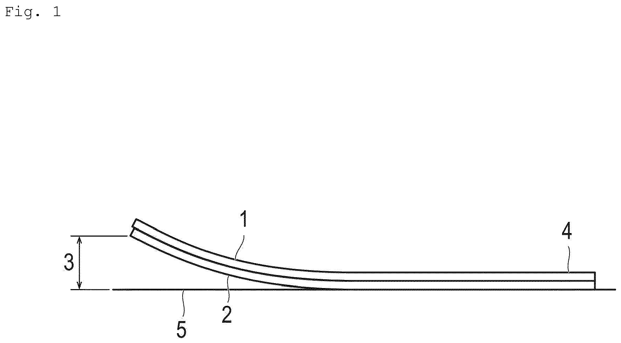

Fig. 1 is a diagram illustrating a method for measuring warpage height in a post-heat-curing warpage test for lamination of aluminum and iron (SPCC-SD, cold-rolled steel sheet, dull-finished). In Fig. 1, 1 indicates an aluminum sheet, 2 indicates an iron (SPCC-SD) sheet, 3 indicates warpage height, 4 indicates a fixed part, and 5 indicates a reference plane, respectively.

### DESCRIPTION OF EMBODIMENTS

An adhesive composition according to an embodiment of the present invention contains the following components (A) to (D):
component (A): an epoxy-modified plant oil;
component (B): a curable resin at least containing an elastomer-modified epoxy resin, provided that the component (A) is excluded;
component (C): a tackifier; and
component (D): a latent curing agent.

The adhesive composition according to an embodiment of the present invention, which has the configuration presented, causes less warpage in adhering materials made of different substances and is superior in adhesion force with keeping bulk strength in the cured product.

Now, details of the present invention will be described. Herein, "X to Y" is used to indicate that the range includes the former and latter numerical values (X and Y) as the lower limit value and the upper limit value, respectively, and means "X or more and Y or less".

### <Component (A)>

The component (A) contained in the adhesive composition of the present invention is an epoxy-modified plant oil, and provides, when being combined with the other components of the present invention, an adhesive composition that causes less warpage in adhering materials made of different substances and is superior in adhesion force with keeping bulk strength in the cured product. The epoxy-modified plant oil is not limited and may be any epoxy resin derived from plant oil, and examples thereof include cardanol-modified epoxy resin, dimer-acid-modified epoxy resin, epoxidated soybean oil, epoxidated linseed oil, epoxidated castor oil, and epoxidated palm oil. Among them, cardanol-modified epoxy resin is preferred because it causes less warpage in adhering materials made of different substances and is superior in adhesion force with keeping bulk strength in the cured product. If there is a compound that corresponds to the epoxy-modified plant oil of the component (A) and also corresponds literally to the elastomer-modified epoxy resin of the component (B) described later, the compound is regarded as the component (A) in the present invention. Examples of such compounds include a compound obtained by reacting rubber extracted from a rubber tree and epoxy resin.

The epoxy equivalent of the component (A) of the present invention is preferably in the range of 220 to 1500 g/eq, more preferably in the range of 300 to 1300 g/eq, and particularly preferably in the range of 400 to 1200 g/eq. By virtue of the epoxy equivalent of the component (A) being in the range presented, an effect of causing less warpage in adhering materials made of different substances with keeping bulk strength in the cured product can be obtained. Here, the epoxy equivalent is a value determined by measurement based on a method specified in JIS K 7236: 2009.

The cardanol in the cardanol-modified epoxy resin refers to a phenolic compound substituted with a long-chain unsaturated hydrocarbon group having 15 carbon atoms, and is obtained from cashew husk. Examples of the cardanol-modified epoxy resin include, but are not limited to, (1) a compound obtained by reaction between the phenolic hydroxy group moiety of cardanol and epichlorohydrin, (2) a compound obtained by reaction between cardanol and formaldehyde followed by reaction between epichlorohydrin and the phenolic hydroxy group moiety, and (3) a compound obtained by conversion of an unsaturated aliphatic chain into a phenolic compound followed by reaction between epichlorohydrin and the phenolic hydroxy group. The cardanol-modified epoxy resin is preferably a cardanol-modified epoxy resin having two or more epoxy groups per molecule, and particularly preferably a compound as represented by formula 1 or formula 2 shown below. With use of the compound represented by formula 1, further enhanced adhesion force to metal can be obtained. Use of the compound represented by formula 2 is preferred because an adhesive composition that results in cured products thereof with superiority in terms of high extensibility and causes less warpage in adhering materials made of different substances with keeping bulk strength in the cured product can be obtained. One of those as the component (A) may be used alone, and two or more thereof may be used as a mixture.

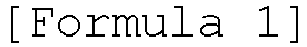

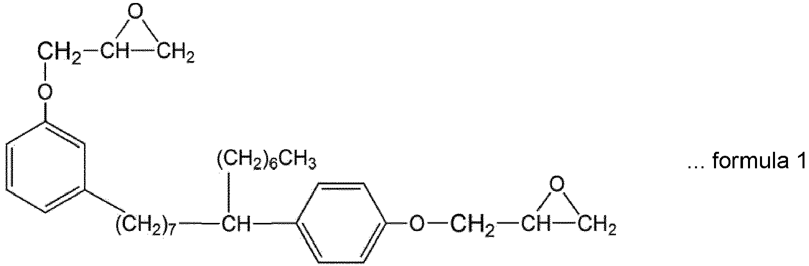

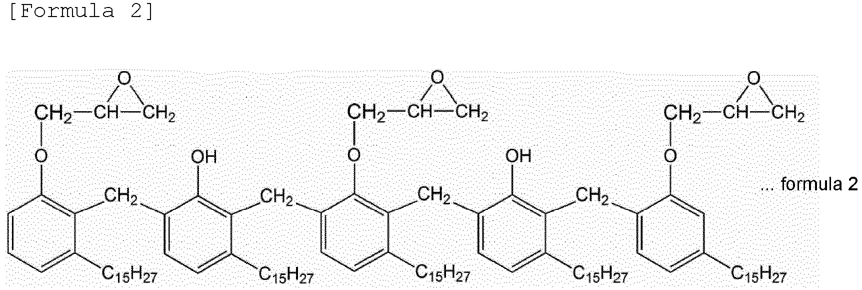

Examples of commercially available products of the cardanol-modified epoxy resin of the component (A) include, but are not limited to, Cardolite (R) NC-547, NC-514, NC-514S, and NC-514SE (manufactured by Cardolite Corporation). One of these commercially available products may be used alone, and two or more thereof may be used as a mixture.

### <Component (B)>

The component (B) contained in the adhesive composition of the present invention is a curable resin at least containing an elastomer-modified epoxy resin, and exerts, when being combined with the other components of the present invention, an effect of causing less warpage in adhering materials made of different substances with keeping bulk strength in the cured product. Examples of the elastomer-modified epoxy resin include a product obtained by reacting (modifying) epoxy resin with an elastomer component. Examples of more specific production methods for the elastomer-modified epoxy resin include known methods such as a method of loading excessive quantities of epoxy resin and a catalyst into an elastomer having a functional group reactive with epoxy groups and allowing them to react together.

The component (B) of the present invention may be a curable resin (mixture) containing, in addition to the elastomer-modified epoxy resin, an aromatic epoxy resin such as bisphenol A epoxy resin, bisphenol F epoxy resin, bisphenol S epoxy resin, bisphenol AD epoxy resin, naphthalene epoxy resin, biphenyl epoxy resin, phenol novolac epoxy resin, and ortho-cresol novolac epoxy resin. For example, a curable resin obtained by post-addition of bisphenol A epoxy resin to the elastomer-modified epoxy resin also corresponds to the component (B). However, the compound (A) is not contained in the component (B). The component (B) may be a mixture containing 10 to 300 parts by mass of an aromatic epoxy resin with respect to 100 parts by mass of the elastomer-modified epoxy resin, and is further preferably a mixture containing 20 to 200 parts by mass of an aromatic epoxy resin.

The epoxy equivalent of the component (B) is preferably in the range of 200 to 1200 g/eq, more preferably in the range of 210 to 1000 g/eq, and particularly preferably in the range of 220 to 900 g/eq. By virtue of the epoxy equivalent of the component (B) being in the range presented, less warpage is caused in adhering materials made of different substances, with keeping bulk strength in the cured product. Here, the epoxy equivalent is a value determined by measurement based on a method specified in JIS K 7236: 2009. As described above, the curable resin of the component (B) of the present invention may be a mixture containing, not only the elastomer-modified epoxy resin, but also an aromatic epoxy resin. In the case of such a mixture, the epoxy equivalent presented above indicates the epoxy equivalent of the mixture.

The epoxy resin in synthesizing the elastomer-modified epoxy resin refers to a compound having one or more glycidyl groups in the molecule, and examples thereof include, but are not limited to, bisphenol A epoxy resin, bisphenol F epoxy resin, bisphenol S epoxy resin, bisphenol AD epoxy resin, naphthalene epoxy resin, biphenyl epoxy resin, glycidylamine epoxy resin, brominated bisphenol A epoxy resin, hydrogenated bisphenol A epoxy resin cyclic epoxy resin, dicyclopentadiene epoxy resin, phenol novolac epoxy resin, and ortho-cresol novolac epoxy resin. Other examples include glycidyl ester epoxy resin obtained by condensation of epichlorohydrin and carboxylic acid such as a phthalic acid derivative and fatty acid. Each of those may be used alone, and two or more thereof may be used as a mixture.

The elastomer component in synthesizing the elastomer-modified epoxy resin refers to an elastomer having a functional group reactive with the epoxy resin, and examples thereof include, but are not limited to, urethane rubber, butadiene rubber, acrylic rubber, silicone rubber, butyl rubber, polyisobutylene rubber, EPDM, polyisoprene rubber, styrene rubber, butadiene-acrylonitrile rubber, and styrene-butadiene rubber (SBR) . Among them, urethane rubber, butadiene rubber, and butadiene-acrylonitrile rubber are preferred from the viewpoint of the occurrence of much less warpage in adhering materials made of different substances. Epoxy resin modified with urethane rubber, butadiene rubber, or butadiene-acrylonitrile rubber is preferred from the viewpoint of adhesiveness. Each of those may be used alone, and two or more thereof may be used as a mixture.

Examples of commercially available products of the component (B) include, but are not limited to: ADEKA RESIN EPR-6, EPR-7, EPR-11, EPR-17, EPR-1415, EPR-2000, EPR-2007, and EPR-1630 (manufactured by ADEKA Corporation); and HyPox (R) RA840, HyPox (R) RA1340, HyPox (R) RA1629, and HyPox (R) RF1320, RF1341, RF928, and RF933 (manufactured by CVC Thermoset Specialties, Inc.). Each of these may be used alone, and two or more thereof may be used as a mixture.

The blend ratio of the component (B) is not limited, and in the range of 30 to 300 parts by mass, preferably in the range of 50 to 200 parts by mass, and particularly preferably in the range of 70 to 170 parts by mass with respect to 100 parts by mass of the component (A). By virtue of the blend ratio being within the range presented, much less warpage is caused in adhering materials made of different substances and higher superiority in adhesion force is provided with keeping bulk strength in the cured product.

### <Component (C)>

The component (C) contained in the adhesive composition of the present invention is a tackifier, and provides, when being combined with the other components of the present invention, an effect of providing superiority in terms of high extensibility in the cured product and causing less warpage in adhering materials made of different substances with keeping bulk strength in the cured product. Examples of the component (C) of the present invention include, but are not limited to, at least one selected from the group consisting of a petroleum-based tackifier, a terpene tackifier, a rosin ester tackifier, and a xylene resin tackifier. A more preferred example is a petroleum-based tackifier, a terpene tackifier, or a rosin ester tackifier. Especially, use of a petroleum-based tackifier is further preferred because of superiority in terms of high extensibility in the cured product. Examples of the petroleum-based tackifier include, but are not limited to, petroleum resin having 5 carbon atoms, copolymer petroleum resin having 5 or 9 carbon atoms, and hydrogenated petroleum resin. It is preferable for the component (C) to contain no epoxy group.

The component (C) is preferably liquid at 25°C. If the component (C) is solid at 25°C, the softening point is preferably in the range of 50 to 170°C, further preferably in the range of 60 to 160°C, and particularly preferably 70 to 150°C. By virtue of the softening point being within the range presented, much less warpage is caused in adhering materials made of different substances and higher superiority in adhesion force is provided. The softening point of the component (C) is a value determined by measurement in accordance with JIS K 2531: 1960. Those may be used singly, and two or more thereof may be used as a mixture.

The loading of the component (C) is preferably 5 to 200 parts by mass, further preferably 10 to 150 parts by mass, and particularly preferably in the range of 15 to 100 parts by mass with respect to 100 parts by mass in total of the components (A) and (B).

By virtue of the loading being within the range presented, much less warpage is caused in adhering materials made of different substances, higher superiority in terms of high extensibility in the cured product is provided, and higher superiority in adhesion force is provided.

Examples of commercially available products of the component (C) include, but are not limited to: the petroleum-based tackifiers Quintone (R) G100B (manufactured by ZEON CORPORATION) and Petrotack (R) 100 and Petrotack (R) 100V (manufactured by Tosoh Corporation); and the terpene phenol resin tackifiers YS Resin PX800 and YS Resin CP (manufactured by YASUHARA CHEMICAL CO., LTD.) and Sylvares (TM) TP95, Sylvares (TM) TP96, and Sylvares (TM) TP105 (manufactured by Arizona Chemical Company, LLC).

### <Component (D)>

The component (D) contained in the adhesive composition of the present invention is a latent curing agent, and examples thereof include at least one compound selected from the group consisting of a latent curing agent of epoxy adduct type, a hydrazide compound, a cyclic amidine salt, a thermal cationic polymerization initiator, and dicyandiamide. Selection may be made from many curing agents for epoxy for the component (D) of the present invention, which provides, when being combined with the other components contained in the adhesive composition of the present invention, an adhesive composition that causes less warpage in adhering materials made of different substances and is superior in adhesion force with keeping bulk strength in the cured product. Although those may be used singly, two or more thereof are particularly preferably used in combination, thereby providing an adhesive composition that causes much less warpage in adhering materials made of different substances and is superior in adhesion force to a higher degree.

Examples of the latent curing agent of epoxy adduct type include a reaction product of an epoxy compound and an amine compound. The amine compound is preferably, but not limited to, an imidazole compound or a tertiary amine compound from the viewpoint of superiority in adhesion force to metal. The softening point of the latent curing agent of epoxy adduct type is preferably lower than 125°C, more preferably 120°C or lower, and particularly preferably 117°C or lower. The softening point in the range presented is preferred because an adhesive composition that causes much less warpage in adhering materials made of different substances can be obtained. The softening point can be determined through a test in accordance with JIS K 7234: 1986.

Examples of commercially available products of the latent curing agent of epoxy adduct type include, but are not limited to, AJICURE (R) PN-23, AJICURE (R) PN-31, AJICURE (R) PN-23J, AJICURE (R) PN-31J, and AJICURE (R) MY-24 (manufactured by Ajinomoto Fine-Techno Co., Inc.). These may be used singly, and two or more thereof may be used as a mixture.

Examples of the hydrazide compound include, but are not limited to, 1,3-bis(hydrazinocarbonoethyl)-5-isopropylhydantoin, 7,11-octadecadiene-1,18-dicarbohydrazide, sebacic dihydrazide, dodecanediohydrazide, isophthalic dihydrazide, salicyl hydrazide, and adipic dihydrazide. Examples of commercially available products of the hydrazide compound include, but are not limited to: AJICURE (R) UDH and VDH (manufactured by Ajinomoto Fine-Techno Co., Inc.); and ADH, SDH, DDH, IDH, and SAH (manufactured by Otsuka Chemical Co., Ltd.). These may be used singly, and two or more thereof may be used as a mixture.

Examples of the cyclic amidine salt include, but are not limited to, phenol salt of DBU (1,8-diazabicyclo(5,4,0)-undecene-7), octylic acid salt of DBU, p-toluenesulfonic acid salt of DBU, formic acid salt of DBU, o-phthalic acid of DBU, DBU derivative tetraphenylborate, phenol novolac resin salt of DBU, and phenol novolac resin salt of DBN (1,5-diazabicyclo(4,3,0)-nonene-5), and preferred examples are DBU phenol novolac resin salt and DBN phenol novolac resin salt. Examples of commercially available products of the cyclic amidine salt include, but are not limited to, U-CAT SA (R) 1, U-CAT SA (R) 102, U-CAT SA (R) 506, U-CAT SA (R) 603, U-CAT SA (R) 810, U-CAT (R) 5002, U-CAT SA (R) 841, U-CAT SA (R) 851, U-CAT (R) 881, and U-CAT (R) 891 (manufactured by San-Apro Ltd.) . These may be used singly, and two or more thereof may be used as a mixture.

The thermal cationic polymerization initiator is a compound that generates a cationic species through heating. Examples of the type thereof include, but are not limited to, a thermal cationic polymerization initiator containing salt composed of the hexafluoroantimonate anion and a cation, a thermal cationic polymerization initiator containing salt composed of the hexafluorophosphate anion and a cation, a thermal cationic polymerization initiator containing salt composed of the tetrakis(pentafluorophenyl)borate anion and a cation, and a boron trifluoride derivative. Preferred among them are a thermal cationic polymerization initiator containing salt composed of the tetrakis(pentafluorophenyl)borate anion and a cation, and a boron trifluoride derivative, from the viewpoint that an adhesive composition that causes less warpage in adhering materials made of different substances and is superior in adhesion force can be obtained. Examples of the cation include the quaternary ammonium cation, and a sulfonium ion in which at least one of the three groups bonding to the sulfur atom is an alkyl group having 1 to 8 carbon atoms . These may be used singly, and two or more thereof may be used as a mixture.

A preferred example of the thermal cationic polymerization initiator containing salt composed of the tetrakis (pentafluorophenyl) borate anion and a cation is a thermal cationic polymerization initiator containing salt composed of the tetrakis(pentafluorophenyl)borate anion and the quaternary ammonium cation, from the viewpoint that an adhesive composition that causes less warpage in adhering materials made of different substances and is superior in adhesion force can be obtained. Examples of the boron trifluoride derivative include, but are not limited to, boron trifluoride monomethylamine, boron trifluoride monoethylamine, and boron trifluoride monopropylamine. These may be used singly, and two or more thereof may be used as a mixture.

Examples of commercially available products of the thermal cationic polymerization initiator containing salt composed of the hexafluoroantimonate anion and a cation include SI-60L, SI-80L, and SI-100L (manufactured by SANSHIN CHEMICAL INDUSTRY CO., LTD.). Examples of commercially available products of the thermal cationic polymerization initiator containing salt composed of the hexafluorophosphate anion and a cation include SAN-AID SI-110L, SI-180L, SI-B2A, and SI-B3A (manufactured by SANSHIN CHEMICAL INDUSTRY CO., LTD.). Further, examples of commercially available products of the thermal cationic polymerization initiator containing salt composed of the tetrakis(pentafluorophenyl)borate anion and a cation include CXC-1821 (manufactured by King Industries, Inc.).

Examples of commercially available products of the dicyandiamide include: OMICURE (R) DDA10, DDA50, DDA100, DDA5, CG-325, DICY-F, and DICY-M (manufactured by CVC Thermoset Specialties, Inc.); jER CURE (R) DICY7, 15, 20, and 7A (manufactured by Mitsubishi Chemical Corporation); and CG-1200 and CG-1400 (manufactured by Air Products Japan, Inc.).

The average particle size of the component (D) is not limited, and, for example, preferably in the range of 0.1 to 100 µm, further preferably in the range of 1 to 50 µm, and particularly preferably in the range of 2 to 30 µm. Hereinafter, the average particle size indicates the 50% average particle size. A method for measuring the average particle size is a laser diffraction/scattering method.

The blend ratio of the component (D) in the present invention is preferably 0.1 to 100 parts by mass, more preferably 0.5 to 75 parts by mass, and particularly preferably 1 to 60 parts by mass with respect to 100 parts by mass in total of the components (A) and (B). With setting the blend ratio within the range presented, an adhesive composition that causes much less warpage in adhering materials made of different substances and is superior in adhesion force to a higher degree can be obtained.

### <Component (E)>

Further, the adhesive composition of the present invention may contain a curing accelerator as a component (E). Examples of the component (E) include, but are not limited to, a urea compound. More specifically, the urea compound is, for example, 3-phenyl-1,1-dimethylurea, 3-(3,4-dichlorophenyl)-1,1-dimethylurea, or 1,1'-(4-methyl-m-phenylene) bis(3,3'-dimethylurea). Examples of commercially available products of the component (E) include EPICLON (R) B-605-IM (manufactured by DIC Corporation).

The loading of the component (E) is preferably 0.1 to 100 parts by mass, more preferably 0.3 to 50 parts by mass, and particularly preferably 0.5 to 30 parts by mass with respect to 100 parts by mass in total of the components (A) and (B). With the loading within the range presented, an adhesive composition that causes much less warpage in adhering materials made of different substances and is superior in adhesion force to a higher degree can be obtained.

### <Optional Component>

An additive such as a silane coupling agent, a filling agent, a preservation stabilizer, an antioxidant, a photostabilizer, a corrosion inhibitor, a solvent, a pigment, a dye, a flame retardant, and a surfactant can be used for the adhesive composition of the present invention, unless the object of the present invention is impaired.

Further, a silane coupling agent may be added to the adhesive composition of the present invention. Examples of the silane coupling agent include: silane coupling agents with a glycidyl group such as 3-glycidoxypropyltriethoxysilane, 3-glycidoxypropylmethyldimethoxysilane, 3-glycidoxypropyltrimethoxysilane, and 3-glycidoxypropylmethyldiethoxysilane; silane coupling agents with a vinyl group such as vinyltris(β-methoxyethoxy)silane, vinyltriethoxysilane, and vinyltrimethoxysilane; silane coupling agents with a (meth)acryl group such as γ-methacryloxypropyltrimethoxysilane; silane coupling agents with an amino group such as N-β-(aminoethyl)-γ-aminopropyltrimethoxysilane, γ-aminopropyltriethoxysilane, and N-phenyl-γ-aminopropyltrimethoxysilane; γ-mercaptopropyltrimethoxysilane; γ-chloropropyltrimethoxysilane; and oligomers of them. Among them, silane coupling agents with a glycidyl group are preferred. Further, among silane coupling agents with a glycidyl group, 3-glycidoxypropyltrimethoxysilane and 3-glycidoxypropyltriethoxysilane are preferred. These may be used singly, and two or more thereof may be used as a mixture.

The blend ratio of the silane coupling agent in the present invention is preferably 0.1 to 100 parts by mass, more preferably 1 to 50 parts by mass, and particularly preferably 1.5 to 30 parts by mass with respect to 100 parts by mass in total of the components (A) and (B). Setting the blend ratio within the range presented is preferred in the present invention from the viewpoint that, thereby, high toughness is imparted to the cured product and an adhesive composition superior in adhesion force between materials made of different substances can be obtained.

Further, a filler may be added to the adhesive composition of the present invention. Examples of the filler include organic powder, inorganic powder, and metallic powder.

Examples of the filler of inorganic powder include silica, titanium oxide, glass, alumina, mica, silicone rubber powder, calcium carbonate, aluminum nitride, carbon powder, kaolin clay, wollastonite, clay minerals, and diatomaceous earth. Among them, wollastonite is preferred because cured products with damping ability can be obtained with the adhesive composition of the present invention. The loading of the inorganic powder is not limited, and preferably about 0.01 to 500 parts by mass, and more preferably in the range of 0.1 to 300 parts by mass with respect to 100 parts by mass in total of the components (A) and (B). Those may be used singly, and two or more thereof may be used as a mixture.

The silica can be blended for the purpose of adjusting the viscosity of the adhesive composition or imparting enhanced mechanical strength to the cured product. For example, silica subjected to hydrophobization treatment with an organochlorosilane, polyorganosiloxane, hexamethyldisilazane, or the like can be preferably used. Specific examples of the silica include commercially available products thereof such as the product names AEROSIL (R) R974, R972, R972V, R972CF, R805, R812, R812S, R816, R8200, RY200, RX200, RY200S, and R202 manufactured by NIPPON AEROSIL CO., LTD. These may be used singly, and two or more thereof may be used as a mixture.

Examples of the organic powder include polyethylene, polypropylene, nylon, crosslinked acrylic, crosslinked polystyrene, polyester, polyvinyl alcohol, polyvinyl butyral, and polycarbonate. The loading of the organic powder is preferably about 0.01 to 500 parts by mass, and more preferably in the range of 0.1 to 300 parts by mass with respect to 100 parts by mass in total of the components (A) and (B). Those may be used singly, and two or more thereof may be used as a mixture.

Examples of the metallic powder include, but are not limited to, gold powder, silver powder, copper powder, nickel powder, palladium powder, tungsten powder, plated powder, and alumina powder. The loading of the metallic powder is preferably about 0.01 to 500 parts by mass, and more preferably in the range of 0.1 to 300 parts by mass with respect to 100 parts by mass in total of the components (A) and (B). Those may be used singly, and two or more thereof may be used as a mixture.

The adhesive composition of the present invention is suitable for adhesion between materials made of different substances. Examples of the adhesion between materials made of different substances include, but are not limited to, adhesion between materials made of substances with different linear expansion coefficients. In this case, the difference in the linear expansion coefficient between the materials made of substances with different linear expansion coefficients is preferably 0.1 × 10⁻⁶/K to 500 × 10⁻⁶/K, more preferably 0.2 × 10⁻⁶/K to 300 × 10⁻⁶/K, and particularly preferably 0.3 × 10⁻⁶/K to 50 × 10⁻⁶/K. Specific examples of combination for the adhesion between different substances include, but are not limited to, metal and metal, metal and plastic, plastic and rubber, plastic and plastic, and rubber and rubber. Preferred among them are metal and metal, metal and plastic, and plastic and plastic.

Examples of the metal include, but are not limited to, iron, aluminum, magnesium, copper, stainless steel, and titanium. Examples of the plastic include, but are not limited to, fiber-reinforced plastic (FRP), carbon-fiber-reinforced plastic (CFRP), polyacrylic, polyester, polyamide, acrylonitrile-butadiene-styrene, nylon-6, polycarbonate, polyacetal, polyethylene terephthalate, polybutylene terephthalate, polyphenylene sulfide, polyphenylene ether, polyether ether ketone, polyethylene, and polypropylene. Examples of the rubber include, but are not limited to, nitrile rubber, urethane rubber, silicone rubber, and ethylene propylene diene rubber (EPDM) . An example is adhesion between at least two adherends selected from materials made of those. The surface of each of the materials may be surface-treated in advance, or untreated.

### <Production Method>

The adhesive composition of the present invention can be produced by using a conventional, known method. For example, the adhesive composition of the present invention can be produced by blending predetermined amounts of the components (A) to (D) and additional optional components, and mixing by using a mixing means such as a mixer, for example, a planetary mixer, preferably at a temperature of 10 to 70°C, more preferably at 20 to 50°C, particularly preferably at normal temperature (25°C), preferably for 0.1 to 5 hours, more preferably for 30 minutes to 3 hours, particularly preferably for around 60 minutes.

### <Assembly>

An assembly in which materials made of different substances are adhered with the adhesive composition of the present invention is also a mode of the present invention.

### <Application Method>

A known method for applying an adhesive is used as a method to apply the adhesive composition of the present invention to a substrate. For example, any method with use of an automatic coating machine, such as dispensing, spraying, ink jet, screen printing, gravure printing, dipping, and spin coating, can be used.

### <Cured Product and Curing Method>

A cured product obtained by heat-curing the adhesive composition of the present invention is also a mode of the present invention. Any conditions that allow sufficient curing may be used for the temperature and time in heating, and it is suitable to heat under conditions, for example, at 40 to 300°C, preferably at 60 to 200°C, particularly preferably at 80 to 190°C, for example, for 10 seconds to 120 minutes, preferably for 20 seconds to 60 minutes, more preferably for 20 seconds to 30 minutes, further preferably for 30 seconds to 10 minutes, particularly preferably for about 60 seconds. For example, conditions at 80 to 190°C for 20 seconds to 30 minutes are suitable.

The elongation percentage of the cured product of the adhesive composition of the present invention is preferably 2 to 2000%, and more preferably 100 to 1700%. The elongation percentage within the range presented is preferred because less warpage is caused in adhering materials made of different substances and higher superiority in adhesion force is provided with keeping bulk strength in the cured product. For the elongation percentage, a value determined by measurement with the following method is employed.

Method for Measuring Elongation Percentage of Cured Product The thickness of the adhesive composition is set to 1 mm, and a sheet-like cured product is prepared through heat curing of the adhesive composition by heating at 170°C for 60 minutes. The cured product is punched with a No. 2 dumbbell to prepare a test piece, and gauge lines at intervals of 20 mm are drawn on the test piece.

The test piece is fixed to chucks in the same fashion as in measurement of tensile strength, and pulled at a tensile speed of 50 mm/min until the test fragment comes to break. While the intervals of the gauge lines are extended because of the elongation of the test piece in measurement, the intervals of the gauge lines are measured with a caliper until the test piece comes to break. The rate of elongation based on the initial gauge line interval is determined as the "elongation percentage (%)". The lower limit of the elongation percentage is preferably 2% or more, and more preferably 100% or more. The upper limit of the elongation percentage is preferably 2000% or less, and more preferably 1700% or less.

The warpage of the adhesive composition of the present invention in adhering materials made of different substances is preferably 3.0 mm or smaller, further preferably 2.5 mm or smaller, and particularly preferably 2. 0 mm or smaller. With the warpage being within the range presented, the adhesive composition of the present invention can be used for applications requiring adhesion between materials made of different substances in the field of automobiles. Test to measure warpage in adhering is carried out, for example, as follows.

### Post-Heat-Curing Warpage Test for Lamination of Materials Made of Different Substances

The adhesive composition is applied to the whole surface of a test piece (25 × 150 × 1.5 mm) made of aluminum (A601P) with a linear expansion coefficient of 23.6 × 10⁻⁶/K to reach a thickness of 0.2 mm. Separately, a test piece (25 × 150 × 1 mm) made of SPCC-SD with a linear expansion coefficient of 11.7 × 10⁻⁶/K is prepared, and the two test pieces are laminated and fixed with clips. Then, the resultant is subjected to conditions of curing in a hot-air drying furnace set to 170°C for 60 minutes to obtain a test assembly. After cooling the test assembly to 25°C, one side in the longitudinal direction is fixed as illustrated in Fig. 1, and the warpage height (mm) of the opposite side is measured.

### <Applications>

The adhesive composition of the present invention can be used in various fields including the field of automobiles, the field of railroad vehicles, the field of aeronautics, the field of electric/electronic parts, the field of construction, and the field of civil engineering, preferably being applicable to the field of automobiles. Examples of applications requiring adhesion between materials made of different substances in the field of automobiles include, but are not limited to, adhesion in folded edges (hemming) to fix an outer panel and an inner panel. More specific examples thereof are adhesion between panels, for example, constituting a door, a pillar, or a roof and adhesion between a body and a roof in automobiles.

### Examples

Hereinafter, the present invention will be described in more detail with reference to Examples; however, the present invention is not limited to Examples.

### <Preparation of Adhesive Composition>

### - Example 1

The following components were added, and mixed by using a mixer for 60 minutes to obtain an adhesive composition of Example 1:
50 parts by mass of trifunctional cardanol-modified epoxy resin (NC-547 manufactured by Cardolite Corporation) represented by formula 2 in the above with an epoxy equivalent of 700 g/eq, a component (a1), as the component (A) of the present invention;
50 parts by mass of a mixture of 40% by mass of a reaction product of butadiene-acrylonitrile rubber and bisphenol A epoxy resin and 60% by mass of bisphenol A epoxy resin (epoxy equivalent: 340 g/eq) (HyPox (R) RA840 manufactured by CVC Thermoset Specialties, Inc.), a component (b1), as the component (B) of the present invention;
20 parts by mass of a terpene phenol resin tackifier (YS Resin CP manufactured by YASUHARA CHEMICAL CO., LTD.), which is liquid at 25°C, a component (c1), as the component (C) of the present invention;
8 parts by mass of OMICURE (R) DDA50 (manufactured by CVC Thermoset Specialties, Inc.), a component (d1), as the component (D) of the present invention; and
4 parts by mass of 3-(3,4-dichlorophenyl)-1,1-dimethylurea (EPICLON (R) B-605-IM manufactured by DIC Corporation), a component (e1), as the component (E) of the present invention.

### - Example 2

An adhesive composition of Example 2 was obtained through preparation in the same manner as in Example 1, except that, in Example 1, the component (a1) was replaced with bifunctional cardanol-modified epoxy resin (NC-547 manufactured by Cardolite Corporation) represented by formula 1 in the above with an epoxy equivalent of 490 g/eq, a component (a2).

### - Example 3

An adhesive composition of Example 3 was obtained through preparation in the same manner as in Example 1, except that, in Example 1, the component (b1) was replaced with urethane-rubber-modified epoxy resin (ADEKA RESIN EPU-7 manufactured by ADEKA Corporation) with an epoxy equivalent of 230 g/eq, a component (b2).

### - Example 4

An adhesive composition of Example 4 was obtained through preparation in the same manner as in Example 1, except that, in Example 1, the component (c1) was replaced with a petroleum-based tackifier (Quintone (R) G100B manufactured by ZEON CORPORATION), which is solid at 25°C with a softening point of 135°C, a component (c2) .

### - Example 5

An adhesive composition of Example 5 was obtained through preparation in the same manner as in Example 1, except that, in Example 1, the loading of the component (b1) was changed from 50 parts by mass to 80 parts by mass, and the loading of the component (c1) was changed from 20 parts by mass to 10 parts by mass.

### - Comparative Example 1

An adhesive composition of Comparative Example 1 was obtained through preparation in the same manner as in Example 1, except that, in Example 1, the component (b1) was excluded.

### - Comparative Example 2

An adhesive composition of Comparative Example 2 was obtained through preparation in the same manner as in Example 1, except that, in Example 1, the component (a1) was excluded and the loading of the component (b1) was changed from 50 parts by mass to 100 parts by mass.

### - Comparative Example 3

An adhesive composition of Comparative Example 3 was obtained through preparation in the same manner as in Comparative Example 2, except that, in Comparative Example 2, the component (b1) was replaced with bisphenol A epoxy resin (jER (R) 828 manufactured by Mitsubishi Chemical Corporation) with an epoxy equivalent of 190 g/eq, a component (b'1).

### - Comparative Example 4

An adhesive composition of Comparative Example 4 was obtained through preparation in the same manner as in Example 1, except that, in Example 1, the component (b1) was replaced with the component (b'1).

### - Comparative Example 5

An adhesive composition of Comparative Example 5 was obtained through preparation in the same manner as in Example 1, except that, in Example 1, the component (c1) was excluded.

Testing methods in tests (1) to (4) carried out for Examples and Comparative Examples in Table 1 are as follows.

### < (1) Post-Heat-Curing Warpage Test for Lamination of Aluminum and Iron (SPCC-SD)>

An adhesive composition was applied to the whole surface of a test piece (25 × 150 × 1.5 mm) made of aluminum (A601P) with a linear expansion coefficient of 23.6 × 10⁻⁶/K to reach a thickness of 0.2 mm. Separately, a test piece (25 × 150 × 1 mm) made of SPCC-SD with a linear expansion coefficient of 11.7 × 10⁻⁶/K was prepared, and the two test pieces were laminated and fixed with clips. Then, the resultant was subjected to conditions of curing in a hot-air drying furnace set to 170°C for 60 minutes to obtain a test assembly. After cooling the test assembly to 25°C, one side in the longitudinal direction was fixed as illustrated in Fig. 1, and the warpage height (mm) of the opposite side was measured. Table 1 presented below shows the results.

In the present invention, the warpage is preferably 3.0 mm or smaller, further preferably 2.5 mm or smaller, and particularly preferably 2.0 mm or smaller for laminating sheets made of different substances.

### <(2) Tensile Lap-Shear Strength Test>

An adhesive composition was applied to a test piece made of SPCC-SD and having a size of 25 mm in width × 100 mm in length × 1 mm in thickness with a linear expansion coefficient of 11.7 × 10⁻⁶/K. Separately, a test piece made of SPCC-SD with a linear expansion coefficient of 11.7 × 10⁻⁶/K was prepared, and the two test pieces were laminated with an overlap area of 25 mm × 10 mm, and fixed with clips. Then, the resultant was cured in a hot-air drying furnace set to 170°C for 60 minutes to obtain a test fragment. Subsequently, lap-shear strength (unit: MPa) was measured for the test fragment by using a universal tensile testing machine (tensile speed: 10 mm/min.) at 25°C in accordance with JIS K 6850: 1999. Table 1 presented below shows the results.

In the present invention, the tensile lap-shear strength is preferably 5.5 MPa or higher, and more preferably 5.9 MPa or higher for use as an adhesive for structures.

### <(3) Method for Measuring Tensile Strength (Bulk Strength) of Cured Product>

The thickness of an adhesive composition was set to 1 mm, and a sheet-like cured product was prepared through heat curing of the adhesive composition by heating at 170°C for 60 minutes. The cured product was punched with a No. 2 dumbbell to prepare a test piece. The both ends of the test piece were fixed to chucks in such a manner that the longitudinal axis of the test piece and the centers of the chucks aligned. The test piece was pulled at a tensile speed of 50 mm/min to measure the maximum load, and the strength at the maximum load was determined as the "tensile strength (MPa) ". The details were in accordance with JIS K 6251: 2010. Table 1 presented below shows the results. The tensile strength is preferably 2.0 MPa or higher, and more preferably 2.5 MPa or higher.

### < (4) Method for Measuring Elongation Percentage of Cured Product>

The thickness of an adhesive composition was set to 1 mm, and a sheet-like cured product was prepared through heat curing of the adhesive composition by heating at 170°C for 60 minutes. The cured product was punched with a No. 2 dumbbell to prepare a test piece, and gauge lines at intervals of 20 mm were drawn on the test piece.

The both ends of the test piece were fixed to chucks in such a manner that the longitudinal axis of the test piece and the centers of the chucks aligned with the chuck-to-chuck interval set to 20 mm. The test fragment was pulled at a tensile speed of 50 mm/min until the test fragment came to break. The elongation before the test fragment came to break was measured relative to the distance traveled by the crosshead, and the rate of elongation based on the initial gauge line interval, 20 mm, was determined as the "elongation percentage (%)". Table 1 presented below shows the results of evaluation using the described method. The lower limit of the elongation percentage is preferably 2% or more, and more preferably 100% or more.

**[Table 1]**

| | Post-heat-curing warpage test for aluminum/iron (SPEC-SD) (mm) | Tensile lap-shear strength (MPa) | Tensile strength (MPa) of cured product | Elongation percentage (%) of cured product |
|---|---|---|---|---|
| Example 1 | 1 | 6.0 | 5.2 | 178 |
| Example 2 | 2 | 12.4 | 4.1 | 2 |
| Example 3 | 2 | 9.1 | 2.8 | 2 |
| Example 4 | 2 | 6.4 | 2.7 | 221 |
| Example 5 | 2 | 7.8 | 5.9 | 104 |
| Comparative Example 1 | 2 | 5.0 | 0.6 | 235 |
| Comparative Example 2 | 0 | 5.8 | 1.8 | 436 |
| Comparative Example 3 | 7 | 22.5 | 23.4 | 5 |
| Comparative Example 4 | 4 | 10.2 | 2.7 | 1 |
| Comparative Example 5 | 5 | 9.8 | 7.4 | 50 |

It can be understood from Examples 1 to 5 in Table 1 above that the present invention provides an adhesive composition that causes less warpage in adhering materials made of different substances and is superior in adhesion force with keeping bulk strength in the cured product.

The results for Comparative Example 1 in Table 1 above, which was an adhesive composition with the component (B) excluded, showed that the bulk strength (tensile strength) of the cured product was poor. The results for Comparative Example 2, which was an adhesive composition with the component (A) excluded, showed that the bulk strength (tensile strength) of the cured product was poor. The results for Comparative Example 3, which was an adhesive composition containing bisphenol A epoxy resin as a primary component without the components (A) and (B) of the present invention, showed that the warpage in adhering materials made of different substances was large. The results for Comparative Example 4, which was an adhesive composition using bisphenol A epoxy resin without the component (B) of the present invention, showed that the elongation percentage of the cured product was as low as 1%, and the warpage in adhering materials made of different substances was large. The results for Comparative Example 5, which was an adhesive composition with the component (C) excluded, showed that the warpage in adhering materials made of different substances was large.

### Industrial Applicability

The adhesive composition of the present invention causes less warpage in adhering materials made of different substances and is superior in adhesion force with keeping bulk strength in the cured product, and hence can be used as an adhesive in various fields including the field of automobiles, thus being industrially applicable.

The present application is based on Japanese Patent Application No. 2019-146136 filed on August 8, 2019, and the entire contents disclosed therein are incorporated herein by reference.

## Claims

1. An adhesive composition comprising the following components (A) to (D) :
component (A): an epoxy-modified plant oil;
component (B): a curable resin at least containing an elastomer-modified epoxy resin, provided that the component (A) is excluded;
component (C): a tackifier; and
component (D): a latent curing agent.

2. The adhesive composition according to claim 1, wherein an elongation percentage of a cured product of the adhesive composition is 2 to 2000%.

3. The adhesive composition according to claim 1 or 2, wherein an epoxy equivalent of the component (A) is 220 to 1500 g/eq.

4. The adhesive composition according to any one of claims 1 to 3, wherein an epoxy equivalent of the component (B) is 200 to 1200 g/eq.

5. The adhesive composition according to any one of claims 1 to 4, comprising 30 to 300 parts by mass of the component (B) with respect to 100 parts by mass of the component (A).

6. The adhesive composition according to any one of claims 1 to 5, wherein the elastomer-modified epoxy resin in the component (B) is an epoxy resin modified with urethane rubber, butadiene rubber, or butadiene-acrylonitrile rubber.

7. The adhesive composition according to any one of claims 1 to 6, wherein the component (A) is a cardanol-modified epoxy resin.

8. The adhesive composition according to any one of claims 1 to 7, comprising 5 to 200 parts by mass of the component (C) with respect to 100 parts by mass in total of the components (A) and (B) .

9. The adhesive composition according to any one of claims 1 to 8, wherein the component (D) is at least one selected from the group consisting of a latent curing agent of epoxy adduct type, a hydrazide compound, a cyclic amidine salt, a thermal cationic polymerization initiator, and dicyandiamide.

10. The adhesive composition according to any one of claims 1 to 9, wherein the component (C) is at least one selected from the group consisting of a petroleum-based tackifier, a terpene tackifier, a rosin ester tackifier, and a xylene resin tackifier.

11. The adhesive composition according to any one of claims 1 to 10, for adhesion between materials made of substances with different linear expansion coefficients.

12. The adhesive composition according to claim 11, wherein the difference in the linear expansion coefficient between the substances with different linear expansion coefficients is 0.1 × 10⁻⁶/K to 500 × 10⁻⁶/K.

13. The adhesive composition according to any one of claims 1 to 12, wherein warpage in adhering materials made of different substances is 3.0 mm or smaller.

14. A cured product obtained by curing the adhesive composition according to any one of claims 1 to 13.

15. An assembly, wherein materials made of different substances are adhered with the adhesive composition according to any one of claims 1 to 13.
